# EUROPEAN PATENT SPECIFICATION

(11) **EP 4 060 005 B1**
(45) Date of publication and mention of the grant of the patent: **29.10.2025**
(21) Application number: 22156291.1
(22) Date of filing: 11.02.2022
(51) Int. Cl.: C09J 7/21, C09J 7/38, C08K 7/16, B44D 3/00

(54) **PRECISION MASKING TAPE FOR DELICATE SURFACES**
PRÄZISIONSABDECKBAND FÜR EMPFINDLICHE OBERFLÄCHEN
RUBAN DE MASQUAGE DE PRÉCISION POUR SURFACES DÉLICATES

(30) Priority: 17.03.2021 IT 202100006368
(43) Date of publication of application: 21.09.2022
(73) Proprietor: PPM Industries S.p.A., 24030 Brembate di Sopra BG (IT)
(72) Inventor: Pellegrini, Luca Leone, 20149 Milano (IT); Nucci, Stefano, 24030 Almenno San Bartolomeo (IT)
(74) Representative: Serravalle, Marco

(56) References cited:
- EP-A1- 1 418 213
- EP-A1- 2 662 428
- WO-A1-2018/150013
- US-A- 4 645 783
- ANONYMOUS: "D90 D50 D10 and span - from diffraction now available 4 DLS?", 25 August 2017 (2017-08-25), pages 1 - 5, XP093195807, Retrieved from the Internet <URL:https://www.malvernpanalytical.com/en/learn/knowledge-center/insights/d90-d50-d10-and-span-for-dls>

## Description

### Field of the invention

**.** The present invention is directed to a tape for precision masking of delicate surfaces with an excellent adhesion to the substrate and ease of removal at the end of use.

### Background of the invention

**.** In the field of whitewashing and painting of environments, it is common practice to cover elements that must be protected from whitewashing/painting with a masking tape. The main properties of this tape must be on the one hand a good adhesion to the substrate, on the other hand the ease of detachment from the substrate itself when, sometimes after a few days, the work is finished, and protection tapes can be removed. These two characteristics are often in contrast with each other, because the higher the adhesion to the substrate, the greater the difficulty to detach the tape at the end of the work and the greater the risk of damaging the substrate itself. Historically, tapes for delicate surfaces are made using products with low adhesive value and medium/ high tack to ensure a good immediate anchoring of the tape on any surface and, at the same time, to allow removal without damage.

**.** EP 2 662 428 discloses a pressure-sensitive adhesive tape for metal surface protection. The tape has an adhesive strength to metal surfaces of at least 10 N/20mm and in the examples it comprises about 23% of microspheres.

**.** EP 1 418 213 discloses a pressure-sensitive adhesive tape comprising as a pressure-sensitive adhesive a composition comprising a mixture of linear and branched alkyl esters of acrylic acid, acrylonitrile, and acrylic acid. The mixture is spread onto a Japanese paper.

**.** WO 2018/150013 discloses a masking tape which has: a) a carrier strip with a first strip region and a second strip region, and b) a first adhesive layer in the first strip region and second adhesive layer in the second strip region. The adhesive force in the first strip region is higher than the adhesive force in the second strip region, and the first adhesive layer and the second adhesive layer are applied on the first side of the carrier strip.

**.** US 4,645,783 discloses a repeatedly usable and releasable tape, wherein the adhesive layer comprises an adhesive copolymer microsphere-containing aqueous suspension and polymer microparticles prepared by polymerization of one or more vinyl monomers.

. There is still a need for a precision masking tape for delicate surfaces that can adhere in a firm and long-lasting way to the various substrates that can be used by the skilled person, but at the same time can be removed from the substrate at the end of its use without causing damage to the substrate itself.

### Summary of the invention

**.** The present invention is directed to a masking tape that includes a backing on which is spread a composition consisting of from 50 to 80 % by weight of microspheres having a De Brouckere mean diameter between 20 microns and 40 microns, as measured by a static light scattering technique, and from 20 to 50 % by weight of a binder comprising a mixture of linear and branched acrylic esters, wherein the percentages are calculated on the organic fraction of the composition. The tape of the present invention is also characterized by an adhesion lower than 1,0 N/cm, as measured according to the method AFERA 5001.

### Detailed description of the invention

. The tape according to this invention comprises a backing tape of Washi paper or Japanese paper. Washi paper, in fact, allows the masking of surfaces without burrs thanks to the texture of the paper itself. In a preferred way of making, Washi paper has a thickness of between 50 µm and 80 µm, more preferably between 60 µm and 70 µm.

**.** For the development of the adhesive composition, we started from low molecular weight acrylic polymers and low Tg to have a high wettability of the application surface and, therefore, a correct tack. Table 1 shows the results of the tests with two commercial low Tg copolymers consisting of 2-ethylhexyl acrylate and butyl acrylate.

**Table 1**

| | Adhesive A | 70% Ad. A | 50% Ad. A | 50% Ad. A | 50% Ad. A | 50% Ad. A |
|---|---|---|---|---|---|---|
| | | 30% Ad. B | 50% Ad. B | 50% Ad. B | 50% Ad. B | 50% Ad. B |
| Quantity (g/m²) | 34 | 35 | 37 | 25 | 19 | 14 |
| Adhesiveness (N/cm) | 1,2 | 1,3 | 1,4 | 1,1 | 1,0 | 0,1 |
| RBT (cm) | 1 | 1,5 | 1,5 | 2,5 | 4,5 | 13 |
| Loop tack (N/cm) | 0,69 | 0,88 | 1,07 | 0,62 | 0,5 | 0,02 |
| Application to smooth wallpaper | Falls | Damage to wallpaper | Damage to wallpaper | Damage to wallpaper | Pass | Falls |
| Application to rough wallpaper | Falls | Falls | Damage to wall paper | Damage to wallpaper | Falls | Falls |
| Adhesion to PVC | Pass | Pass | Pass | Pass | Pass | Falls |
| Adhesion to wood | Pass | Pass | Pass | Pass | Pass | Falls |
| Adhesion to aluminium | Pass | Pass | Pass | Pass | Pass | Falls |
| Adhesion to fresh paint | Damage to paint | Damage to paint | Damage to paint | Falls | Falls | Falls |

**.** The different adhesive mixtures did not allow to reach the expected results in the application tests confirming that by the use of conventional acrylic adhesives it is difficult to reach the right compromise between adhesiveness, tack and cohesion. Only when achieving this compromise it is possible to have a tape that adheres on surfaces as delicate as those tested and is easily released without damaging the surface.

**.** In order to maximize tack and at the same time confer a good anchoring to surfaces, some products have been taken into consideration that are applied in the field of repositionable, i.e. adhesives containing microspheres. These adhesives, more generally defined as heterogeneous PSA, comprise a low Tg acrylic microspheres, slightly cross-linked, whose size varies in the range 10-100 micrometers. Suspended microspheres are mixed with a binder emulsion, which when dried forms the adhesive matrix.

**.** The principle of microspheres is to create a heterogeneous structure able to limit the points of contact between the adhesive component and the application surface. According to literature, the aspects that most characterize the performance of a microsphere adhesive are: the amount of adhesive applied, the diameter of the microspheres, the type of binder used, the ratio between binder and microspheres and finally the adhesive of the microspheres itself. The use of microspheres with adhesive properties in pressure sensitive adhesive compositions (PSA) has been known since the 1970s. Microspheres used in the PSA field are generally prepared by emulsion polymerisation of an acrylic or methacrylic monomer in the presence of an ionic monomer and/or an ionic or non-ionic surfactant. To change the adhesive power of microspheres it is known the use of acrylic or methacrylic acid. Examples of microsphere formation processes are disclosed, among others, in US 3,691,140, US 4,166,152 and US 4,786,696.

**.** This type of adhesives, due to their heterogeneous nature, i.e. the presence of several phases within the same system, does not have high internal cohesion because the binder-microsphere interphase represents a point of discontinuity and fragility. This phenomenon is even more evident when the quantity of adhesive increases and the microspheres increase with respect to the binder. This leads to the possibility that the microspheres stratify inside the adhesive. The optimal structure is achieved with a single layer of microspheres so that they can adhere to the coated substrate, reducing the risk of cohesive adhesive breakages that cause release phenomena.

**.** Based on these assumptions, it was decided to continue the development of the product by applying an amount of adhesive between 10-16 g/m². Among the different adhesive microsphere available on the market, it was selected an adhesive having the following characteristics: volume average diameter of the microspheres: 30 µm, ratio microspheres/binder 85/15. The De Brouckere mean diameter is the mean of a particle size distribution weighted by the volume. It is measured by static light scattering techniques such as laser diffraction.

**.** A first set of tests was conducted using microsphere-based compositions, with a very low amount of binder, of about 15% by weight. Under these conditions, good behaviour has been observed on surfaces such as paper, but problems of adhesive transfer on the surface in the case of PVC and aluminium. Essentially, part of the microspheres remained on the surface after the tape was removed. In Table 2 the results of the tests are shown on two compositions with slightly different weight, using microspheres obtained by polymerization of 2-ethylhexyl acrylate and butyl acrylate as binder in 85/15 proportion. The microspheres have an average volumetric diameter of about 30 µm. The two compositions differ only in the quantity of adhesive.

**Table 2**

| | Composition 1 | Composition 2 |
|---|---|---|
| Quantity (g/m²) | 16,3 | 13 |
| Peel Adhesion (N/cm) | 0,7 | 0,7 |
| RBT (cm) | 9 | 10 |
| Loop tack (N/cm) | 0,28 | 0,19 |
| Application on wallpaper | Pass | Pass |
| Application on rough wallpaper | Pass | Pass |
| Adhesion to PVC | adhesive transfer | adhesive transfer |
| Adhesion to wood | adhesive transfer | adhesive transfer |
| Adhesion to aluminium | adhesive transfer | adhesive transfer |
| Adhesion to fresh paint | Pass | Pass |

**.** Following analytical checks directly on the sample, it was found that the release of adhesive was due to the transfer of microspheres to the application surface. It was necessary to modify the adhesive by reducing the density of microspheres per unit of area, acting on the amount of microspheres on the total mass of adhesive, by using a second low-Tg binder in order to distribute the microspheres more evenly and increase their spacing, giving greater resistance to cohesive fracture. For this purpose, the composition used for the tests in Table 1 was mixed with an acrylic binder consisting of a mixture of approximately 80/20 2-ethylhexyl acrylate and butyl acrylate. The weight ratio of the microspheres to the binder was changed as follows: 68/32, 40/60, 24/76. The results obtained are shown in Table 3, which shows that a quantity of microspheres of 40 % by weight is insufficient to ensure the optimum result that is achieved by the composition comprising 68 % by weight of microspheres. Consequently, the composition of the present invention contains microspheres in a quantity between 50 and 80 % by weight, preferably between 55 and 75 % by weight, even more preferably between 60 and 70 % by weight, based on the organic components of the composition.

**Table 3**

| | Microsphere/ binder 68/32 | Microsphere/ binder 40/60 | Microsphere/ binder 24/76 |
|---|---|---|---|
| Quantity (g/m²) | 13 | 14 | 15 |
| Peel Adhesion (N/cm) | 0,6 | 0,4 | 0,5 |
| RBT (cm) | 7,5 | 14 | 12,5 |
| Loop tack (N/cm) | 0,35 | 0,23 | 0,17 |
| Application on wallpaper | Pass | Pass | Pass |
| Application on rough wallpaper | Pass | Pass | Falls |
| Adhesion to PVC | Pass | Pass | Pass |
| Adhesion to wood | Pass | Pass | Pass |
| Adhesion to aluminium | Pass | Pass | Pass |
| Adhesion to fresh paint | Pass | Paint damage | Paint damage |

**.** In order to avoid the detachment of microspheres from the substrate, it is common practice to mix the microspheres with an acrylic or methacrylic binder. The use of a binder allows not only to avoid the detachment of the microspheres but also to dose the adhesiveness of the formulation. In fact, as the percentage of binder increases, also the adhesive power of the formulation increases. This invention is preferably directed to a formulation comprising as a binder a mixture of a linear alkyl acrylate (or methacrylate) and a branched alkyl acrylate (or methacrylate), wherein the branched alkyl group is C₅-C_{10,} and the linear alkyl group is C₂-C₆, and wherein the branched alkyl group contains more carbon atoms than the linear alkyl group. In a preferred embodiment, the linear acrylic ester is n-butyl acrylate, and the branched acrylic ester is iso-octyl acrylate, even more preferably 2-ethylhexyl acrylate.

**.** Microspheres can be characterized not only by the monomers used for their preparation, but also by the size of the microsphere, which mainly derives from the size of the dispersed phase of the initial emulsion in the microsphere preparation process. As the size of the microspheres increases, the contact surface between the binder and the target surface, i.e. the surface on which the tape is placed, decreases. If we think of a tape containing microspheres with an average volumetric diameter of about 50 µm, for a fairly high concentration of microspheres we will have that the binder will be placed on the support and will have an average level of less than 50 µm. Thus, once we apply the tape to the target surface, we will have that the contact between the surface and the adhesive will occur mainly on the microspheres that protrude from the composition. As the size of the microspheres decreases, the possibility of contact between the target surface and the binder will increase, thus increasing the adhesion force of the tape on the surface. The present invention is directed to a PSA composition using microspheres having a De Brouckere mean diameter between 20 µm and 40 µm, preferably between 25 µm and 35 µm, as measured by a static light scattering technique.

**.** Another important parameter for the adhesive properties of the tape is the amount of adhesive composition present on the tape itself. Increasing the quantity expressed in g/m² will increase the adhesion of the tape itself. In particular, the quantity of adhesive affects the percentage of application surface that comes into contact with the adhesive composition compared to the percentage of application surface that comes into contact with the microspheres.

**.** Therefore, the study covered a number of parameters such as type and size of microspheres, type of binder, relative ratio of microspheres/binder and amount of adhesive composition. As for the amount of adhesive composition, it has been observed that the best results are obtained with an amount of adhesive on the support between 10 and 20 g/m², more preferably between 12 and 18 g/m².

**.** The adhesive composition may also optionally include a plasticizer in quantities preferably between 0 and 2% by weight. Plasticizers are generally used in polymer systems to soften a composition or to make it more processable. Because PSA adhesives represent a unique class of adhesives characterized by their ability to form bonds upon application of a slight pressure, plasticizers can play an important role in improving their performance. Examples of plasticizers useful in this invention are phthalates, benzoates, polyesters, vegetable oil epoxides, and PEG. A preferred plasticizer is PEG.

**.** In addition, the adhesive composition of this invention may include between 0 and 2 % functional monomers such as acrylic acid and crosslinked monomers.

**.** As for the size of the microspheres, although it is possible to obtain compositions having a good adhesion and good release properties even with microspheres of greater diameter, it has been found that a volume average particle diameter of between 20 and 40 µm, preferably between 25 and 35 µm, represents the best compromise between the various needs of the product.

**.** The starting monomer for obtaining microspheres is preferably iso-octyl acrylate. They may also be present in smaller amounts of (meth)acrylic acid and/or an ionic monomer and/or an ionic or non-ionic surfactant.

**.** Thus, in a preferred embodiment, the tape according to this invention comprises an adhesive composition of between 10 and 20 g/m², a quantity of microspheres between 50 and 80 %, preferably between 55 % by weight and 75 % by weight, even more preferably between 60 and 70 % by weight, with an average volumetric particle diameter of between 20 and 40 µm. The microspheres are polymers of a branched alkyl C₄₋₈ (meth)acrylate, while the binder is a mixture of branched C₄₋₈ and linear C₂₋₆ alkyl acrylate. Preferably the binder includes a mixture of butyl acrylate and 2-ethylhexyl acrylate. Even more preferably the weight ratio of butyl acrylate to 2-ethylhexyl acrylate is between 70:30 and 30:70.

## Claims

1. A masking tape for precision masking of sensitive surfaces, comprising:
a. a washi paper support;
b. a composition spread onto the support, wherein the composition comprises from 50 to 80 wt % of microspheres having a De Brouckere mean diameter comprised between 20 µm and 40 µm as measured by a static light scattering technique, and from 20 wt % to 50 wt % of a binder comprising a mixture of linear and branched acrylic esters, being the percentage calculated on the organic fraction of the composition;
wherein the tape shows an adhesion lower than 1.0 N/cm, as measured according to the method AFERA 5001.

2. The tape of claim 1, wherein the linear acrylic ester comprises butyl acrylate.

3. The tape of claims 1-2, wherein the branched acrylic ester comprises iso-octyl acrylate.

4. The tape of claims 1-3, wherein the binder comprises from 0 to 2 wt % of a plasticizer.

5. The tape of claim 4, wherein the plasticizer is PEG.

6. The tape of claims 1-5, wherein the microspheres have a De Brouckere mean diameter comprised between 25 µm and 35 µm.

7. The tape of claims 1-6, wherein the binder comprises a mixture of butyl acrylate and 2-ethylhexyl acrylate.

8. The tape of claim 7, wherein the esters present in the binder consists of a mixture of butyl acrylate and 2-ethylhexyl acrylate

9. The tape of claims 7-8, wherein the weight ratio between butyl acrylate and 2-ethylhexyl acrylate is comprised between 70:30 and 30:70.

10. The tape of claims 1-9, wherein the composition spread onto the support comprises from 55 to 75 wt % of microspheres.

11. The tape of claim 10, wherein the amount of microsphere is comprised between 60 and 70 wt %.

12. The tape of claims 1-11, wherein the support is a washi paper having a thickness comprised between 50 µm and 80 µm.

13. The tape of claim 12, wherein the support is a washi paper having a thickness comprised between 60 µm and 70 µm.

14. The tape of claim 1, wherein the microspheres have a De Brouckere mean diameter comprised between 25 µm and 35 µm; the binder comprises a mixture of butyl acrylate and 2-ethylhexyl acrylate and the amount of microspheres is comprised between 60 and 70 wt %.

## Patentansprüche

1. Abdeckband zum präzisen Abdecken empfindlicher Oberflächen, umfassend:
a. einen Washi-Papierträger;
b. eine auf den Träger aufgetragene Zusammensetzung, wobei die Zusammensetzung 50 bis 80 Gew.-% Mikrosphären mit einem De-Brouckere-Mitteldurchmesser zwischen 20 µm und 40 µm, gemessen mit einer statischen Lichtstreutechnik, und 20 Gew.-% bis 50 Gew.-% eines Bindemittels umfasst, das ein Gemisch aus linearen und verzweigten Acrylatestern enthält, wobei der Prozentsatz auf den organischen Anteil der Zusammensetzung berechnet wird;
wobei das Band eine Haftung von weniger als 1,0 N/cm aufweist, gemessen nach der Methode AFERA 5001.

2. Abdeckband nach Anspruch 1, wobei der lineare Acrylester Butylacrylat umfasst.

3. Abdeckband nach einem der Ansprüche 1-2, wobei der verzweigte Acrylester Isooctylacrylat umfasst.

4. Abdeckband nach einem der Ansprüche 1-3, wobei das Bindemittel 0 bis 2 Gew.-% eines Weichmachers umfasst.

5. Abdeckband nach Anspruch 4, wobei der Weichmacher PEG ist.

6. Abdeckband nach einem der Ansprüche 1-5, wobei die Mikrosphären einen De-Brouckere-Mitteldurchmesser zwischen 25 µm und 35 µm aufweisen.

7. Abdeckband nach einem der Ansprüche 1-6, wobei das Bindemittel ein Gemisch aus Butylacrylat und 2-Ethylhexylacrylat umfasst.

8. Abdeckband nach Anspruch 7, wobei die im Bindemittel vorhandenen Ester aus einem Gemisch aus Butylacrylat und 2-Ethylhexylacrylat bestehen.

9. Abdeckband nach einem der Ansprüche 7-8, wobei das Gewichtsverhältnis zwischen Butylacrylat und 2-Ethylhexylacrylat zwischen 70:30 und 30:70 liegt.

10. Abdeckband nach einem der Ansprüche 1-9, wobei die auf den Träger aufgetragene Zusammensetzung 55 bis 75 Gew.-% Mikrosphären umfasst.

11. Abdeckband nach Anspruch 10, wobei die Menge an Mikrosphären zwischen 60 und 70 Gew.-% liegt.

12. Abdeckband nach einem der Ansprüche 1-11, wobei der Träger ein Washi-Papier mit einer Dicke zwischen 50 µm und 80 µm ist.

13. Abdeckband nach Anspruch 12, wobei der Träger ein Washi-Papier mit einer Dicke zwischen 60 µm und 70 µm ist.

14. Abdeckband nach Anspruch 1, wobei die Mikrosphären einen De-Brouckere-Mitteldurchmesser zwischen 25 µm und 35 µm aufweisen, das Bindemittel ein Gemisch aus Butylacrylat und 2-Ethylhexylacrylat umfasst und die Menge an Mikrosphären zwischen 60 und 70 Gew.-% liegt.

## Revendications

1. Ruban de masquage pour le masquage de précision de surfaces sensibles, comprenant :
a. un support en papier washi ;
b. une composition déposée sur le support, ladite composition comprenant de 50 à 80 % en poids de microsphères ayant un diamètre moyen de De Brouckere compris entre 20 µm et 40 µm, mesuré par une technique de diffusion statique de la lumière, et de 20 % à 50 % en poids d'un liant comprenant un mélange d'esters acryliques linéaires et ramifiés, le pourcentage étant calculé sur la fraction organique de la composition ;
le ruban présentant une adhérence inférieure à 1,0 N/cm, mesurée selon la méthode AFERA 5001.

2. Ruban selon la revendication 1, dans lequel l'ester acrylique linéaire comprend l'acrylate de butyle.

3. Ruban selon l'une des revendications 1-2, dans lequel l'ester acrylique ramifié comprend l'acrylate d'iso-octyle.

4. Ruban selon l'une des revendications 1-3, dans lequel le liant comprend de 0 à 2 % en poids de plastifiant.

5. Ruban selon la revendication 4, dans lequel le plastifiant est le PEG.

6. Ruban selon l'une des revendications 1-5, dans lequel les microsphères ont un diamètre moyen de De Brouckere compris entre 25 µm et 35 µm.

7. Ruban selon l'une des revendications 1-6, dans lequel le liant comprend un mélange d'acrylate de butyle et d'acrylate de 2-éthylhexyle.

8. Ruban selon la revendication 7, dans lequel les esters présents dans le liant consistent en un mélange d'acrylate de butyle et d'acrylate de 2-éthylhexyle.

9. Ruban selon l'une des revendications 7-8, dans lequel le rapport pondéral entre l'acrylate de butyle et l'acrylate de 2-éthylhexyle est compris entre 70:30 et 30:70.

10. Ruban selon l'une des revendications 1-9, dans lequel la composition déposée sur le support comprend de 55 à 75 % en poids de microsphères.

11. Ruban selon la revendication 10, dans lequel la quantité de microsphères est comprise entre 60 et 70 % en poids.

12. Ruban selon l'une des revendications 1-11, dans lequel le support est un papier washi ayant une épaisseur comprise entre 50 µm et 80 µm.

13. Ruban selon la revendication 12, dans lequel le support est un papier washi ayant une épaisseur comprise entre 60 µm et 70 µm.

14. Ruban selon la revendication 1, dans lequel les microsphères ont un diamètre moyen de De Brouckere compris entre 25 µm et 35 µm, le liant comprend un mélange d'acrylate de butyle et d'acrylate de 2-éthylhexyle et la quantité de microsphères est comprise entre 60 et 70 % en poids.
